# FASCICULE DE BREVET EUROPEEN

(11) **EP 0 594 478 B1**
(45) Date de publication et mention de la délivrance du brevet: **04.02.1998**
(21) Numéro de dépôt: 93402518.0
(22) Date de dépôt: 13.10.1993
(51) Int. Cl.: G06F 11/267

(54) **Circuit intégré à la demande à microprocesseur incorporant des moyens pour le test**
Anwendungsspezifische Integrierte Schaltung mit einem Mikroprozessor und Prüfmitteln
ASIC with a microprocessor and with test facilities

(30) Priorité: 22.10.1992 FR 9212647
(43) Date de publication de la demande: 27.04.1994
(73) Titulaire: SOCIETE D'APPLICATIONS GENERALES D'ELECTRICITE ET DE MECANIQUE SAGEM, F-75783 Paris Cédex 16 (FR)
(72) Inventeur: Darnault, Patrick, F-95000 Cergy-Pontoise (FR)
(74) Mandataire: Bloch, Gérard

(56) Documents cités:
- EP-A- 0 457 115
- WO-A-90/13043
- DE-U- 9 000 825
- PROCEEDINGS OF THE INTERNATIONAL TEST CONFERENCE 10 Septembre 1990 , WASHINGTON DC US pages 488 - 492 IMMANENI ET AL 'DIRECT ACCESS TEST SCHEME-DESIGN OF BLOCK AND CELLS FOR EMBEDDED ASICS'

## Description

La présente invention concerne un circuit intégré à la demande, dit ASIC (Application Specific Integrated Circuit), comportant un microprocesseur pouvant être inhibé en vue de tester diverses fonctions de l'ASIC.

Un circuit intégré à la demande est un circuit électronique rassemblant, dans un même substrat semi-conducteur, l'équivalent de plusieurs circuits intégrés du commerce ayant chacun une fonction propre, déterminée par un utilisateur en vue de disposer d'un nouveau type de circuit intégré répondant précisément à ses besoins. Le substrat comporte ainsi différentes zones assurant chacune une fonction prédéterminée, par exemple une fonction microprocesseur, une fonction mémoire, une fonction logique, une fonction contrôleur de signaux.

Le choix des fonctions et l'arrangement de divers circuits de liaison entre les zones est effectué par l'utilisateur à partir d'un catalogue des fonctions prédéterminées qui lui est présenté par le futur fabricant de l'ASIC, ou fondeur. Les fonctions sont normalisées et, de plus, les performances, comme la vitesse de fonctionnement, de l'ASIC sont garanties, ce dernier étant généralement dit "pré-caractérisé". L'ASIC ainsi défini par l'utilisateur peut alors être fabriqué.

Dans le cas où l'utilisateur souhaite disposer immédiatement d'un ASIC, par exemple pour valider rapidement un montage électronique, et qui soit immédiatement disponible, le fabricant propose un catalogue comportant une liste d'ASIC normalisés, généralement dits "prédiffusés", car fabriqués à l'avance.

L'utilisateur peut alors effectuer successivement deux choix, l'un pour les fonctions, l'autre pour les liaisons entre ces fonctions.

Tout d'abord, comme chaque ASIC de cette liste comporte un groupe, spécifique, d'un certain nombre de fonctions prédéterminées, comme celles indiquées ci-dessus, l'utilisateur a ainsi de bonnes chances de trouver dans cette liste un ASIC qui, même s'il n'est pas de composition optimisée quant aux fonctions qu'il rassemble, permet cependant de satisfaire immédiatement au besoin de l'utilisateur.

Ensuite, comme les circuits de liaison entre les entrées et les sorties des circuits électriques remplissant les diverses fonctions ne peuvent être définis à l'avance, donc proposés au catalogue, du fait que l'établissement de ces liaisons dépend des besoins propres de l'utilisateur, les ASIC proposés comportent des circuits de liaison, reliés aux diverses entrées et sorties des circuits fonctionnels de l'ASIC, qui sont accessibles depuis des bornes de raccordement de l'ASIC. Ainsi, l'utilisateur, disposant de l'ASIC qu'il a choisi, peut effectuer le second choix, par exemple en reliant deux à deux certains des circuits de liaison ci-dessus pour permettre, à chaque fois, la transmission d'un signal venant d'un circuit électronique situé dans une zone du substrat de l'ASIC, remplissant une fonction, vers une entrée d'un autre circuit électronique situé dans une autre zone du substrat, remplissant une autre fonction, afin que l'ASIC soit personnalisé pour réaliser globalement une fonction électronique voulue par l'utilisateur, l'ASIC étant ainsi un circuit "à la demande".

Lorsque l'utilisateur veut valider un montage électronique qui comporte un microprocesseur et d'autres circuits intégrés commandés par le microprocesseur, comme, par exemple, un ASIC sans microprocesseur, une mémoire pour logiciel ou données, des circuits de logique, un contrôleur de signaux, on commence par en faire une maquette sur une carte électronique de test, mais sans le microprocesseur, qu'on remplace par une sonde déportant ses connexions vers un émulateur.

Un émulateur est donc un appareil qui permet la validation d'un montage électronique et qui simule, au moyen d'une mémoire contenant le logiciel du microprocesseur, le fonctionnement de ce dernier, et auquel il se substitue. L'émulateur dispose de moyens sophistiqués permettant d'analyser et mémoriser, dans une de ses mémoires, les signaux qu'il échange avec les circuits intégrés de la carte, afin que l'utilisateur décèle, localise et corrige d'éventuels défauts du logiciel ou des circuits de liaison incorrectement placés entre les circuits intégrés de la carte. Une fois validé, le logiciel, qui ne nécessite plus de modifications, peut alors être placé par l'utilisateur dans une mémoire à contenu figé, dite mémoire morte, située sur la carte et associée au microprocesseur de celle-ci, en vue d'une production de série.

Le procédé indiqué ci-dessus suppose que l'on peut aisément omettre de la carte le microprocesseur tout en y laissant les autres circuits intégrés, c'est-à-dire que la fonction microprocesseur n'est pas associée, dans un même boîtier de circuit intégré, à d'autres fonctions devant rester sur la carte lors de l'émulation.

Ceci n'est plus le cas lorsque le microprocesseur est un microprocesseur déjà intégré dans un circuit complexe, comme un ASIC, comprenant aussi, dans le même substrat semi-conducteur, d'autres fonctions.

Un ASIC de ce dernier type est utilisé, par exemple, dans un télécopieur pour gérer ses échanges de données avec la ligne à laquelle il est raccordé, ainsi que pour l'analyse et l'impression locale de ces données.

Pour valider chacun des circuits électroniques d'un ASIC, PROCEEDINGS OF THE INTERNATIONAL TEST CONFERENCE 10-14 sept. 1990, p. 488-492 IEEE, New-York, US, enseigne d'implanter en entrée/sortie de l'ASIC, des circuits d'aiguillage permettant d'accéder successivement, en entrée/sortie, à chacun des circuits à valider, tout en inhibant les autres afin qu'ils ne perturbent pas les résultats observés du test.

DE-U-90 00 825 enseigne d'isoler le microprocesseur d'un ASIC pour effectuer l'émulation de celui-ci au sein de l'ASIC.

Cependant, l'enseignement de ces documents ne permet pas d'effectuer, simplement et sans ajout excessif de circuits, à la fois la validation individuelle des divers circuits électroniques et l'émulation du microprocesseur.

Dans ce cas, pour valider l'ASIC à réaliser, l'utilisateur n'a pas d'autre solution que de revenir au cas précédent, c'est-à-dire reproduire, sur une carte de test, les diverses fonctions de l'ASIC, au moyen de circuits du commerce réalisant chacun l'une de ces fonctions.

Cela présente l'inconvénient d'avoir à réaliser la carte de test, ce qui est coûteux et entraîne un délai supplémentaire pour sa réalisation. De plus, les divers circuits intégrés du commerce se présentant sous la forme de boîtiers séparés et distincts, ils n'ont pas exactement le même comportement analogique que s'ils étaient intégrés dans une seule puce électronique, si bien que, même si les fonctions logiques sont testées, il peut subsister des problèmes analogiques, non révélés par le test, qui vont empêcher un fonctionnement logique correct de l'ASIC une fois réalisé.

La présente invention vise à éliminer ces inconvénients.

A cet effet, l'invention concerne un circuit intégré à la demande ASIC, comprenant un microprocesseur, dont au moins une entrée fonctionnelle est reliée à une sortie fonctionnelle d'un circuit électronique de l'ASIC et dont au moins une sortie fonctionnelle est reliée à une entrée fonctionnelle d'un circuit électronique dudit ASIC, l'ASIC comportant des moyens pour déporter au moins une entrée fonctionnelle du microprocesseur en sortie de l'ASIC et des moyens pour déporter au moins une sortie fonctionnelle du microprocesseur en entrée/sortie de l'ASIC, caractérisé par le fait que l'ASIC comporte en outre des moyens d'inhibition de circuits électroniques et du microprocesseur agencés pour inhiber ladite sortie fonctionnelle du microprocesseur et au moins une porte électronique, branchée en série entre ladite au moins une sortie fonctionnelle du microprocesseur et l'entrée/sortie de l'ASIC où elle est déportée et assurant le passage de signaux du microprocesseur vers l'entrée/sortie lors d'une première phase de test électrique permettant de tester le microprocesseur ou l'un des circuits électroniques, et agencée pour que son sens de passage s'inverse de l'entrée/sortie vers le microprocesseur, ce dernier étant inhibé sous la commande desdits moyens d'inhibition, lors d'une seconde phase de test où le fonctionnement global de l'ASIC est testé par émulation du microprocesseur.

Ainsi, on utilise la puce de l'ASIC réalisé pour effectuer le test de celle-ci, en mettant hors service, par rapport aux autres circuits électroniques de l'ASIC, le microprocesseur, par une entrée de l'ASIC destinée à la commande des moyens d'inhibition. On peut alors substituer à celui-ci un émulateur prenant le contrôle des circuits de liaison qui ne sont plus contrôlés par une sortie de microprocesseur et activant ainsi les autres circuits électroniques, qui fonctionnent ainsi dans leur environnement réel pour ce qui est de leur liaisons mutuelles. Si l'émulateur est raccordé en un point d'un circuit de liaison de déport dans l'ASIC qui est séparé, par une des portes, du point où est raccordé le microprocesseur, l'inversion du sens de passage de la porte rétablit le fonctionnement correct de l'ASIC.

Ainsi, la configuration des sens des diverses portes est déterminée localement et immédiatement, sans risque d'erreur. Si les portes sont initialement agencées pour que leur sens de passage dépende d'un signal appliqué à chacune, en provenance, par exemple, d'un contrôleur de signaux, l'activation des moyens d'inhibition a pour effet d'en inverser l'action.

Avantageusement, ladite entrée fonctionnelle du microprocesseur est également inhibée.

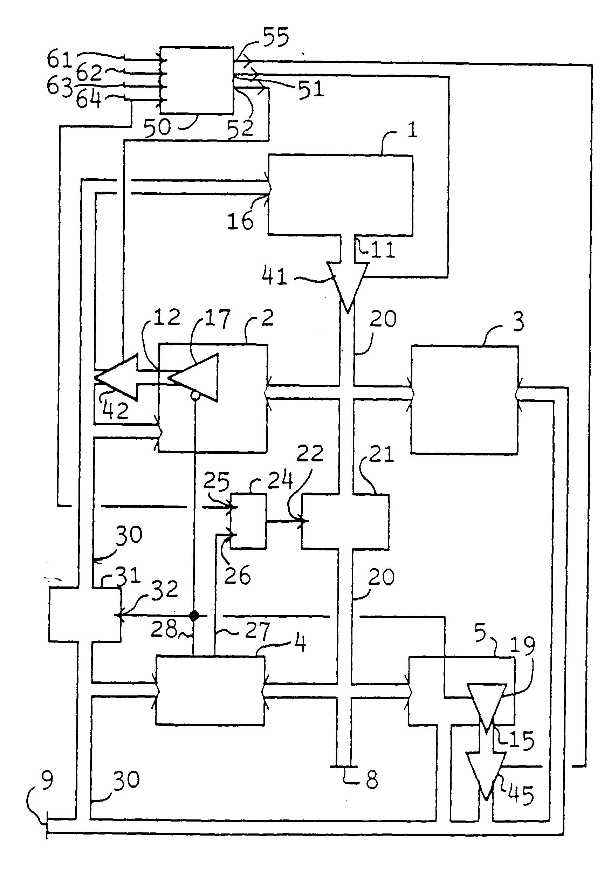

L'invention sera mieux comprise à l'aide de la description suivante de la forme de réalisation préférée d'un ASIC selon l'invention, en référence au dessin en annexe dont la figure unique en est une représentation schématique par blocs.

L'ASIC représenté sur la figure est réalisé au moyen d'un cristal de matériau semi-conducteur sur lequel ont été réalisés, en diverses zones, les éléments qui vont être décrits et, en particulier, des circuits électroniques, dont un microprocesseur 1 et, dans cet exemple, une mémoire vive 2, une mémoire morte 3, un contrôleur de signaux 4 et un ensemble de circuits de logique combinatoire 5. La mémoire vive 2 est destinée à mémoriser provisoirement des données, tandis que la mémoire morte 3 est destinée à contenir un logiciel destiné au microprocesseur 1 et des données permanentes. La logique combinatoire 5 sert à réaliser des fonctions spécialisées, plus rapidement que le microprocesseur 1, tandis que le contrôleur de signaux 4 sert, entre autres, à commander le sens de passage de portes logiques amplificatrices, décrites plus loin, situées sur des liaisons à sens réversible reliant les circuits 1 à 5.

Ainsi, un circuit de liaison 20 relie une sortie fonctionnelle 11 du microprocesseur 1 à une entrée fonctionnelle de chacun des circuits 2 à 5. Il comporte une liaison directe, constituée d'une piste conductrice reliant la sortie 11 aux circuits 2 et 3, ainsi qu'une porte logique amplificatrice 21 dont une entrée de signal reliée à la sortie 11 et dont la sortie est reliée à une autre piste conductrice du circuit de liaison 20 elle-même reliée à des entrées respectives des circuits 4 et 5 ainsi qu'à une borne 8 d'entrée/sortie de l'ASIC accessible depuis l'extérieur de celui-ci. Dans cet exemple, la porte 21 est du type bidirectionnel, c'est-à-dire qu'elle a un sens de passage qui est déterminé par l'état logique d'une entrée de commande 22 de la porte 21. Les mots "entrée de signal" et "sortie" n'ont donc qu'une signification relative pour une porte bidirectionnelle. L'entrée de commande 22 est ici reliée à la sortie d'une porte OU exclusif 24 à deux entrées, 25 et 26, cette dernière recevant un signal 27 de commande de sens de passage, provenant du contrôleur de signaux 4.

La porte électronique amplificatrice 21 est destinée à régénérer, à partir du point sur le parcours du circuit de liaison 20 où elle est reliée par son entrée de signal, des signaux transmis et qui, en l'absence de la porte 21, seraient trop affaiblis du fait que la sortie 11 les engendrant n'a pas la puissance nécessaire pour alimenter le nombre d'entrées auxquelles le circuit de liaison 20 est raccordé.

Un circuit de liaison 30 relie une sortie fonctionnelle 15 du circuit 5 à une entrée fonctionnelle de chacun des circuits 1 à 5. Il comporte une liaison directe, constituée d'une piste conductrice reliant la sortie 15 aux circuits 3, 4, 5 et à une borne 9 de sortie de l'ASIC, accessible depuis l'extérieur de celui-ci, ainsi qu'une entrée de signal d'une porte logique amplificatrice 31 dont la sortie est reliée à une autre piste conductrice du circuit de liaison 30 elle-même reliée à une entrée fonctionnelle 16 du circuit 1 ainsi qu'à une entrée et à une sortie 12 du circuit 2. Dans cet exemple, la porte 31 est du type bidirectionnel, c'est-à-dire qu'elle a un sens de passage qui est déterminé par l'état logique d'une entrée de commande 32 de la porte 31. L'entrée de commande 32 est reliée à une sortie du contrôleur de signaux 4, agencée pour fournir un signal 28 de commande de sens de passage. Le signal 28 est aussi appliqué à une entrée du circuit 5 et du circuit 2.

La sortie 15 comporte, en série, une porte 19 du type "trois-états", c'est-à-dire que sa sortie peut être, en fonction de l'état logique d'une entrée de commande de cette porte, soit à un état logique, 0 ou 1, soit à un état à haute impédance pour lequel la sortie de la porte 19 est isolée de l'extérieur. L'entrée de commande de la porte 19 reçoit le signal 28. Ainsi, commandée par le signal 28, la sortie 15 peut être isolée du circuit de liaison 30.

De façon analogue, la sortie 12 comporte une porte 17 du type "trois-états". L'entrée de commande de la porte 17 comporte, en tête, un inverseur recevant le signal 28. Ainsi, commandée par le signal 28, la sortie 12 peut être isolée du circuit de liaison 30.

On comprendra que, dans un but de clarté, il n'est représenté qu'un nombre restreint des entrées et sorties des divers circuits électroniques existant réellement dans l'ASIC, et, en particulier, que chaque circuit 1 à 5 comporte plusieurs entrées et plusieurs sorties.

D'autre part, toutes les sorties, représentées ou non, des circuits 1 à 5 comportent chacune une porte d'inhibition, de type trois-états, branchée en série entre la sortie concernée et le circuit de liaison 20 ou 30 correspondant et orientée de façon à laisser passer des signaux émis par la sortie reliée au circuit de liaison.

Ainsi, la sortie 11 est reliée à l'entrée de signal d'une porte d'inhibition 41, la sortie 12 à celle d'une porte d'inhibition 42, tandis que la sortie 15 l'est à celle d'une porte d'inhibition 45.

Un circuit de test 50 est relié en entrée à une borne de test 61 de l'ASIC ainsi qu'à des bornes d'adressage 62 et 63, toutes accessibles depuis l'extérieur de l'ASIC. Il comporte diverses sorties, référencées 51, 52 et 55 qui sont respectivement reliées à des entrées de commande de toutes les portes d'inhibition, respectivement 41, 42 et 45 d'un même circuit électronique, respectivement 1, 2 et 5. Comme indiqué plus haut, pour la clarté, il n'a été représenté, au plus, qu'une seule porte d'inhibition pour chaque circuit électronique 1 à 5.

En l'absence d'un signal de test sur la borne 61, le circuit 50 est sans effet sur les portes d'inhibition, qui sont alors passantes, toutes les sorties des circuits 1 à 5 pouvant être activées et être reliées au circuit de liaison 20 ou 30 respectif dans la mesure où le signal 27 ou 28 le permet. Lorsque le signal de test est appliqué sur la borne 61 et que des signaux d'adresse sont appliqués sur les bornes 62 et 63, toutes les sorties du circuit 50, sauf une, définie par les signaux d'adresse ci-dessus, sont à l'état désactivé, ce qui entraîne que les portes d'inhibition 41, 42 et 45 commandées par celles-ci sont à l'état haute impédance et interrompent tout passage de signaux issus des sorties des circuits électroniques concernés, hormis celui dont les portes d'inhibition ne sont pas à l'état haute impédance.

Le circuit 50 est relié en entrée à une borne 64 d'inhibition du microprocesseur 1, accessible depuis l'extérieur et destinée à recevoir un signal d'inhibition du microprocesseur 1. En pareil cas, quel que soit l'état des signaux sur les bornes 61, 62 et 63, la sortie 51 est à l'état désactivé, ce qui commande l'interruption du passage des signaux issus du microprocesseur 1, par la sortie 11 dans cet exemple, tandis que les sorties 52 et 55 sont à l'état activé. La borne 64 est aussi reliée à l'entrée 25 du circuit 24.

Le fonctionnement de l'ASIC est le suivant.

Dans une première phase, de test électrique, juste après la fabrication de l'ASIC, le signal de test est appliqué sur la borne 61, tandis que des signaux d'adresse sont appliqués sur les bornes 62 et 63, ce qui inhibe toutes les sorties des circuits 1, 2 et 5 sauf celles de l'un d'eux, que l'on veut tester et qui est défini par les signaux d'adresse. Le signal d'inhibition n'est pas appliqué. Les circuits ci-dessus autres que celui en cours de test reçoivent des signaux par leurs entrées, qui ne sont pas inhibées, et fonctionnent, mais sans pouvoir émettre de signaux, hormis les signaux 27 et 28 qui peuvent toujours être transmis. Par exemple, pour tester le circuit 1, le signal de test et les signaux d'adresse désactivent les sorties 52 et 55, ce qui a pour effet de faire passer à l'état haute impédance les portes 42 et 45, isolant ainsi les sorties 12 et 15, tandis que la porte 41 est passante sous la commande de la sortie 51 à l'état activé. Le signal 27 du circuit 4, qui contrôle le signal 22, commande la porte 21 pour la rendre passante vers l'entrée/sortie 8. Comme indiqué précédemment, les sorties des circuits 1 à 5, hormis celles fournissant les signaux 27 et 28, sont toutes associées à des portes trois-états permettant d'inhiber les circuits voulus.

On peut ainsi appliquer, sur des bornes d'entrée de l'ASIC non représentées, des signaux parvenant au circuit 1 à 5 dont les sorties ne sont pas inhibées et observer, sur d'autres bornes de l'ASIC, des signaux produits en réponse par le circuit ci-dessus lors de chacun des cycles élémentaires de fonctionnement du circuit testé. Un circuit 1 à 5 ayant été testé, on change les signaux d'adresse et on teste ainsi successivement le fonctionnement électrique de tous les circuits 1 à 5. Le contrôleur de signaux 4 configure, en début de chaque cycle d'échange de signaux, le sens de passage de la porte 31 pour que des signaux, issus de la sortie 12 ou bien 15 qui doit transmettre des signaux sur cette liaison 30, puissent traverser la porte 31. Le signal 27 est constant, dans cet exemple, et est transmis, sans modification, par le circuit OU exclusif 24 à l'entrée de commande 22 pour que la porte 21 soit passante pour des signaux provenant de la sortie 11, comme indiqué déjà ci-dessus.

Dans une seconde phase, destinée à vérifier le fonctionnement global de l'ASIC, et en particulier le logiciel prévu pour celui-ci, le signal d'inhibition est appliqué sur la borne 64, ce qui inhibe la sortie 11 du microprocesseur 1 en faisant passer à l'état haute impédance la porte 41 associée. Les bornes d'entrée/sortie 8 et de sortie 9 sont alors respectivement reliées par un câble à une sortie et à une entrée d'un émulateur, non représenté, se substituant au microprocesseur 1 et en simulant le fonctionnement. La porte OU exclusif 24, recevant, sur son entrée 25, le signal d'inhibition, fournit en sortie, sur l'entrée de commande 22 de la porte 21, un signal de commande qui est le signal 27 inversé, ce qui a pour effet d'inverser le sens de passage de la porte 21, qui est alors passante en partant de la borne 8.

La sortie de l'émulateur reliée à la borne d'entrée/sortie 8 peut ainsi prendre le contrôle du circuit de liaison 20, c'est-à-dire y envoyer des signaux, reçus par tous les circuits 2 à 5, en lieu et place de la sortie 11 du microprocesseur 1, qui est ainsi déportée en entrée de l'ASIC. Pour ce qui est du circuit de liaison 30, relié à l'entrée 16 du microprocesseur 1, il ne nécessite pas d'inverser le sens de passage de la porte 31 puisque l'entrée de l'émulateur, qui se substitue à l'entrée 16 du microprocesseur 1 déportée en sortie de l'ASIC grâce à la borne 9 reliée au circuit de liaison 30, n'a qu'à y observer les signaux, sans devoir en transmettre.

Le logiciel de l'ASIC peut ainsi être validé lors de cycles successifs d'échange de signaux, correspondant chacun à une étape élémentaire du logiciel, sous la commande de l'émulateur. Dans le présent exemple, il n'a pas été prévu que le circuit de liaison 20 puisse recevoir des signaux issus de plusieurs sorties des circuits 1 à 5 qui seraient raccordées de part et d'autre de la porte 21, ce qui entraîne, comme indiqué précédemment, qu'en fonctionnement normal, c'est-à-dire sans émulateur, la porte 21 a un sens de passage constant, donc que le signal 27 est constant. On comprendra qu'elle pourrait, tout comme la porte 31, être raccordée à une sortie de plusieurs des circuits 1 à 5 et devoir changer de sens sous la commande du signal 27, le signal d'inhibition inversant systématiquement le signal 27 dans la porte 24.

On remarquera que les sorties 12 et 15, qui sont reliées au circuit de liaison 30 et qui doivent pouvoir en être isolées pour n'en raccorder qu'une seule à un instant donné, comportent chacune, de ce fait, une paire de portes trois-états, respectivement 17 et 42 ainsi que 19 et 45, la porte amont 17 et 19 de chaque paire servant à cet effet. Bien que chacune des deux portes de la paire ait un rôle spécifique, elles peuvent cependant être remplacées par une seule porte trois-états commandée en conséquence, ce qui simplifie le schéma électrique.

## Revendications

1. Circuit intégré à la demande (ASIC), comprenant un microprocesseur (1), dont au moins une entrée fonctionnelle (16) est reliée à une sortie fonctionnelle (15) d'un circuit électronique de l'ASIC et dont au moins une sortie fonctionnelle (11) est reliée à une entrée fonctionnelle d'un circuit électronique dudit ASIC, l'ASIC comportant des moyens (9,30) pour déporter au moins une entrée fonctionnelle (16) du microprocesseur en sortie (9) de l'ASIC et des moyens (21,24) pour déporter au moins une sortie fonctionnelle (11) du microprocesseur en entrée/sortie (8) de l'ASIC,
caractérisé par le fait que l'ASIC comporte en outre des moyens (24, 41, 42, 45, 50) d'inhibition de circuits électroniques (2, 3, 4, 5) et du microprocesseur (1) agencés pour inhiber ladite sortie fonctionnelle (11) du microprocesseur et au moins une porte électronique (21), branchée en série entre ladite au moins une sortie fonctionnelle (11) du microprocesseur et l'entrée/sortie (8) de l'ASIC où elle est déportée et assurant le passage de signaux du microprocesseur (1) vers l'entrée/sortie (8) lors d'une première phase de test électrique permettant de tester le microprocesseur (1) ou l'un des circuits électroniques (2,3,4,5), et agencée pour que son sens de passage s'inverse de l'entrée/sortie (8) vers le microprocesseur (1), ce dernier étant inhibé sous la commande desdits moyens d'inhibition (24), lors d'une seconde phase de test où le fonctionnement global de l'ASIC est testé par émulation du microprocesseur (1).

2. Circuit selon la revendication 1, dans lequel on inhibe également ladite entrée fonctionnelle (16) du microprocesseur (1).

## Patentansprüche

1. Nach Bedarf integrierter Schaltkreis (ASIC), mit einem Mikroprozessor (1), von dem zumindest ein funktioneller Eingang (16) mit einem funktionellen Ausgang (15) eines elektronischen Schaltkreises des ASIC verbunden ist und von dem zumindest ein funktioneller Ausgang (11) mit einen funktionellen Eingang eines elektronischen Schaltkreises des genannten ASIC verbunden ist, wobei der ASIC Mittel (9, 30) aufweist, um zumindest einen funktionellen Eingang (16) des Mikroprozessors an den Ausgang (9) des ASIC zu verlagern, und Mittel (21, 24), um zumindest einen funktionellen Ausgang (11) des Mikroprozessors an den Eingang/Ausgang (8) des ASIC zu verlagern, dadurch gekennzeichnet, daß der ASIC weiterhin Mittel (24, 41, 42, 45, 50) zum Sperren von elektronischen Schaltkreisen (2, 3, 4, 5) und dem Mikroprozessor (1) aufweist, die so eingerichtet sind, um den genannten funktionellen Ausgang (11) des Mikroprozessors zu sperren, und zumindest ein elektronisches Gatter (21), das in Reihe zwischen den genannten, zumindest einen funktionellen Ausgang (11) des Mikroprozessors und den Eingang/Ausgang (8) des ASIC geschaltet ist, an den es verlagert wird und den Durchgang von Signalen des Mikroprozessors (1) zu dem Eingang/Ausgang (8) bei einer ersten elektrischen Prüfphase gewährleistet, die ermöglicht, den Mikroprozessor (1) oder einen der elektronischen Schaltkreise (2, 3, 4, 5) zu prüfen, und so eingerichtet ist, daß seine Durchgangsrichtung von dem Eingang/Ausgang (8) zum Mikroprozessor (1) hin umkehrt, wobei dieser unter der Steuerung der genannten Mittel (24) zum Sperren gesperrt ist, während einer zweiten Prüfphase, in der die globale Funktion des ASIC durch Emulation des Mikroprozessors (1) geprüft wird.

2. Integrierter Schaltkreis nach Anspruch 1, dadurch gekennzeichnet, daß der genannte funktionelle Eingang (16) des Mikroprozessors (1) ebenfalls gesperrt ist.

## Claims

1. Application specific integrated circuit (ASIC), comprising a microprocessor (1), whereof at least one functional input (16) is connected to a functional output (15) of an electronic circuit of the ASIC and whereof at least one functional output (11) is connected to one functional input of an electronic circuit of said ASIC, the ASIC comprising means (9, 30) for diverting at least one functional input (16) of the microprocessor to the output (9) of the ASIC and means (21, 24) for diverting at least one functional output (11) of the microprocessor to the input/output (8) of the ASIC, characterised by the fact that the ASIC also comprises means (24, 41, 42, 45, 50) for inhibiting electronic circuits (2, 3, 4, 5) and the microprocessor (1) arranged to inhibit said functional output (11) of the microprocessor and at least one electronic gate (21), connected in series between said at least one functional output (11) of the microprocessor and the input/output (8) of the ASIC where it is diverted and ensuring the passage of signals from the microprocessor (1) towards the input/output (8) at the time of a first electrical test phase making it possible to test the microprocessor (1) or one of the electronic circuits (2, 3, 4, 5) and arranged in order that its direction of passage inverts from the input/output (8) towards the microprocessor (1), the latter being inhibited under the control of said inhibiting means (24), at the time of a second test phase where the overall operation of the ASIC is tested by emulation of the microprocessor (1).

2. Circuit according to Claim 1, in which said functional input (16) of the microprocessor (1) is also inhibited.
